# EUROPÄISCHE PATENTSCHRIFT

(11) **EP 1 310 140 B1**
(45) Veröffentlichungstag und Bekanntmachung des Hinweises auf die Patenterteilung: **14.06.2006**
(21) Anmeldenummer: 01958025.7
(22) Anmeldetag: 26.07.2001
(51) Int. Cl.: G01G 19/414

(54) **LADENWAAGE ZUM ABWICKELN EINZELNER VORGÄNGE**
SHOP SCALE FOR HANDLING INDIVIDUAL PROCESSES
BALANCE DE MAGASIN PERMETTANT D'EXECUTER DIFFERENTS PROCESSUS

(30) Priorität: 14.08.2000 DE 10039705
(43) Veröffentlichungstag der Anmeldung: 14.05.2003
(73) Patentinhaber: Mettler-Toledo (Albstadt) GmbH, 72458 Albstadt (DE)
(72) Erfinder: MÜRDTER, Herbert, 72461 Albstadt (DE)
(74) Vertreter: Leinweber & Zimmermann
(86) Internationale Anmeldenummer: PCT/EP2001/008675
(87) Internationale Veröffentlichungsnummer: WO 2002/015644

(56) Entgegenhaltungen:
- US-A- 5 227 614
- PATENT ABSTRACTS OF JAPAN vol. 1998, no. 09, 31. Juli 1998 (1998-07-31) & JP 10 104277 A (KOKUSAI ELECTRIC CO LTD), 24. April 1998 (1998-04-24)
- PATENT ABSTRACTS OF JAPAN vol. 2000, no. 06, 22. September 2000 (2000-09-22) & JP 2000 090384 A (YOKOGAWA ELECTRIC CORP), 31. März 2000 (2000-03-31)

## Beschreibung

Die Erfindung betrifft ein Ladenwaage nach den Oberbegriff des Patentanspruchs 1.

Derartige Ladenwaagen können beispielsweise in Selbstbedienungsläden mit verschiedenen Verkaufsinseln, in denen ein Verkauf einzelner Waren mit Bedienung stattfindet, etwa für Käse, Frischfleisch, Obst, Gemüse oder dgl., zum Einsatz kommen. Dabei ist es üblich, dass mehrer Verkäufer die selbe Waage benutzen. Dabei kann es vorkommen, dass einer der Verkäufer nach Abschluss der Wägung und Buchung eines ersten Produktes für seinen derzeitigen Kunden das nächste Gut für die Wägung vorbereitet, während ein anderer Verkäufer mit der zuvor von dem ersten Verkäufer benutzten Waage das Gewicht eines Produktes für einen anderen Kunden ermittelt. Diesen Teilvorgang des gesamten Verkaufsvorganges für den betroffenen Kunden schließt der Verkäufer durch Betätigung seiner Verkäufertaste ab. Dadurch wird ein Kennzeichnungssignal erzeugt, auf dessen Grundlage das Wägeergebnis und der daraus ermittelte Kaufpreis dem von dem Verkäufer gerade ausgeführten und dem jeweiligen Kun-Iden zugeordneten Verkaufsvorgang zugeordnet wird. Eine derartige Ablösung kann sich bei der zeitlich überlappenden Abwicklung mehrerer Verkaufsvorgänge mehrmals wiederholen. Hat der Kunde keine weiteren Wünsche mehr, schließt der Verkäufer den diesem Kunden zugeordneten Vorgang ab. Das erfolgt in der Regel durch Betätigung einer bestimmten Taste (Total) der Eingabetastatur des Gerätes und einer Betätigung seiner Verkäufertaste, durch die wiederum ein Kennzeichnungssignal erzeugt wird, welches die Zuordnung der durch Betätigung der entsprechenden Taste erzeugten Abschlusssignals zu diesem Vorgang ermöglicht.

Ist die Waage in einen Verbund eingeschlossen, kann der Verkäufer zur Abwicklung einzelner Teilvorgänge auch andere Waagen benutzen, wenn seine eigene Waage gerade besetzt ist oder ihm dies aus anderen Gründen praktischer zu sein scheint. Auch bei der Benutzung anderer Waagen werden die im Verlauf der Teilvorgänge erzeugten Werte, wie etwa die Gewichtswerte oder Verkaufspreise durch Betätigung der entsprechenden Verkäufertaste und Erzeugung entsprechender Kennzeichnungssignale dem von dem betreffenden Verkäufer gerade abgewickelten Verkaufsvorgang zugeordnet.

Die zusätzliche Tastatureingabe zur Erzeugung der Kennzeichnungssignale vor oder nach den einzelnen Teilvorgän en ist zeitraubend und fehleranfällig. Außerdem sollte die Erzeugung derartiger Kennzeichnungsignale vertrauenswürdigen Personen vorbehalten bleiben, um eine Missbrauch auszuschließen. Bei mehreren in einem Verbund zusammengeschlossenen Ladenwaagen und zahlreichen Benutzern kann es darüber hinaus zu Problemen kommen, wenn die Anzahl der zur Verfügung stehenden Tasten nicht ausreicht, um jedem Benutzer eine Taste zuzuweisen. Dann müssen zur Erzeugung der Kennzeichnungssignale Tastenkombinationen ausgewählt werden, so dass der Benutzer bei jedem Teilvorgang zur Erzeugung der Kennzeichnungssignale mehrere Tasten drücken muss.

In der GB 2 252 188 A ist ein System zur automatischen Produktidentifikation bei Verkaufsvorgängen angegeben. Es wird ein Produktidentifikationssystem mit einer tragbaren Produkterfassungseinheit vorgeschlagen, mit der Produktidentifikationsdaten erfaßt und anschlie-βend an eine Ladenwaage gesendet werden. Ferner können gleichzeitig mit den Produktinformationsdaten auch noch Verkäuferdaten an das System gesendet werden, um so die Verkaufstätigkeit der einzelnen Verkäufer zu überwachen.

In der EP 0 295 658 A2 ist ein Kassensystem beschrieben, das zur Erfassung der Verkaufstätigkeit einzelner Verkäufer geeignet ist. Zu diesem Zweck wird der Einsatz von Namensschildern vorgeschlagen, mit denen die jeweiligen Verkäufer identifizierende Daten an das Kassengerät gesendet werden können.

In der EP 0 890 927 A2 ist eine Anordnung zum Erfassen und Auswerten von Zeit- und Betriebsdaten angegeben. Die aus der genannten Schrift bekannte Anordnung umfaßt Identifikationskarten und tragbare Handgeräte, welche eine Lesevorrichtung für die Identifikationskarten, eine Uhr, einen Datenspeicher für Informationen, wie Namen, Kostenstellen, Projektnummern und dgl., sowie Mittel zur Datenverarbeitung aufweisen, welche die von den Identifikationskarten gelesenen Daten mit der Uhrzeit und mitgespeicherten Daten zu Ereignisdatensätzen verknüpfen und abspeichern.

Angesichts der vorstehend erläuterten Probleme im Stand der Technik liegt der Erfindung die Aufgabe zugrunde, eine Weiterbildung der vorstehend erläuterten Geräte bereitzustellen, auf welchen eine rasche und zuverlässige Zuordnung der im Verlauf der einzelnen Vorgänge erzeugten Werte, insbesondere Messwerte bzw. daraus ermittelter Werte, zu den einzelnen Vorgängen ermöglicht.

Erfindungsgemäß wird diese Aufgabe durch die im kennzeichnenden Teil des Patensanspruchs 1 angegebene Weiterbildung bekannter Ladenwaagen gelöst, Bevorzugte Ausführungsformen der Erfindung sind in den abhängigen Pakutansprüchen angegeben.

Durch diese Weiterbildung werden Ladenwaagen der eingangs angegebenen Art gewissermaßen sehend gemacht, so dass sie die einzelnen Verkaufsvorgänge selber erkennen und entsprechende Identifikationssignale abgeben können Die dazu erforderliche Empfangseinrichtung kann in ein auch die übrigen Elemente den Ladenwaagen enthaltendes Gehäuse integriert sein. Darüber hinaus ist jedoch auch an den Einsatz von separaten Empfängern gedacht, welche über Datenleitungen oder drahtlos mit den übrigen Elementen des Gerätes in Verbindung stehen.

Dabei beruht die Erfindung auf der verblüffend einfachen Erkenntnis, dass die Erzeugung der Kennzeich u gssignale durch Betätigung entsprechender Eingabeelemente selbst bei Benutzung der Ladenwaagen durch mehrere Benutzer nicht mehr erforderlich ist, wenn die diesen Benutzern zugeordneten ldentifikationssignale oder auf andere Art und Weise einzelnen Vorgängen zugeordneten ldentifikationssignale in der unmittelbaren Umgebung der Ladenwaagen empfangen werden, weil sich bei der Abwicklung einzelner Teilvorgänge der Benutzer oder anderer diesem Vorgang zugeordneter Signalgeber regelmäßig in der Umgebung der Ladenwaagene aufhalt, während andere Benutzer bzw. andere Signalgeber sich in einem größeren Abstand von dem Gerät befinden, so dass eine einfache Trennung der von dem jeweils aktiven Signalgeber erzeugten Identifikationssignale von anderen Identifikationssignalen möglich ist.

Zweckmäßigerweise ist dem Empfänger der erfindungsgemäßen Ladenwaage dazu ein Diskriminator, der empfangenen Signale unterschiedlicher Herkunft und/oder Stärken voneinander unterscheidet, sowie eine Validiervorrichtung, welche aufgrund charakteristischer Merkmale einzelner von dem Diskriminator diskriminierter Signale einen bestimmten Vor gang erkennt, zugeordnet. Dazu können die charakteristischen Unterschiede, welche die Identifikationssignale bestimmter Signalgeber, wie etwa Benutzer, auszeichnen in einem vorausgegangenen Initialisierungsprozess ermittelt und gespeichert worden sein. Ist der Vorgang mit Hilfe der Identifikationssignale einmal erkannt, lässt sich die Zuordnung der bei der Abwicklung des Vorganges erzeugten Werte, meistens die einzelnen Messergebnisse oder daraus ermittelte Verkaufspreise, aber auch den Beginn oder das Ende eines Vorganges anzeigende Steuersignale, zum jeweiligen Vorgang ohne weiteres Zutun automatisch bewerkstelligen.

Wie aus der vorstehenden Erläuterung zum Stand der Technik zu entnehmen ist, kann das erfindungsgemäße Geräte eine Messeinrichtung, insbesondere eine Wägezelle, zum Erzeugen von Messsignalen, wie etwa Gewichtssignalen, aufweisen, wobei die Erzeugung der Werte auf Grundlage dieser Messsignale bzw. Gewichtssignale erfolgt. Dabei können die Werte das Messergebnis oder ein auf Grundlage des Messergebnisses erzeugte Ergebnis, wie etwa den Verkaufspreis einer mit einer preisrechnenden Waage abgewogenen Ware darstellen. Zweckmäßigerweise weist das Gerät dazu eine Steuereinrichtung auf, mit der es zur zeitlich überlappenden Abwicklung von mindestens zwei Vorgängen ansteuerbar ist, von denen mindestens einer zwei Teilvorgänge umfasst, in deren Verlauf jeweils ein Wert erzeugt wird.

In besonders vorteilhafter Ausgestaltung der Erfindung ist der Steuereinrichtung eine Speichereinrichtung zugeordnet, in der die Werte so abgelegt werden, dass sie den von den Kennzeichnungssignalen gekennzeichneten Vorgängen zugeordnet sind. Dazu können einzelne Speicherbereiche der Speichereinrichtung einzelnen Vorgängen fest zugeordnet sein. Alternativ oder zusätzlich ist jedoch auch daran gedacht, den die einzelnen Werte darstellenden Daten den Kennzeichnungssignalen entsprechende Daten hinzuzufügen, um so eine Zuordnung der Werte zu dem von den Kennzeichnungssignalen gekennzeichneten Vorgängen zu ermöglichen. Wie vorstehend im Zusammenhang mit preisrechnenden Ladenwaagen erläutert, weist ein erfindungsgemäßes Gerät zweckmäßigerweise auch eine Steuersignalerzeugungseinrichtung zum Erzeugen von dem Beginn und/oder dem Abschluss eines Vorgangs darstellenden Steuersignalen auf. Diese Steuersignalerzeugungseinrichtung kann beispielsweise in Form einer Eingabetastatur verwirklicht sein.

Wenn der Vorgan auf Grundlage der ldentifikationssignale erkannt worden ist, können in der Ladenwaage für Vorgänge der erkannten Art charakteristische Voreinstellungen vorgeschlagen und auf eine entsprechende Betätigung oder auch automatisch vorgenommen werden. Dazu ist die Steuereinrichtung der Lagenwaage zweckmäßigerweise so ausgelegt, dass sie ansprechend auf die Identifikationssignale bzw. die auf deren Grundlage erzeugten Kennzeichnungssignale zum Abrufen und/oder Ausgeben von den einzelnen Vorgängen zugeordneten Daten und/oder zur Anpassung von Geräteeinstellungen an die einzelnen Vorgänge betreibbar ist.

Darüber hinaus ist es möglich, dass die Ladenwaage nur für bestimmte Vorgänge freigegeben wird. Dann kann ein Vorgang zwar erkannt jedoch zurückgewiesen werden, weil das Gerät für derartige Vorgänge, beispielsweise für die Benutzung durch bestimmte Bedienungspersonen, nicht freigegeben ist. Dabei kann die Ladenwaage auch die momentanen Einstellungen überprüfen und in Abhängigkeit von diesen Einstellungen ermitteln, ob eine Freigabe für den anhand der ldentifikationssignale erkannten Vorgang erfolgen kann.

Wie eingangs bereits erläutert, können die einzelnen Vorgänge einzelnen Bedienungspersonen zugeordnet sein, beispielsweise dann, wenn in einem Verkaufsgeschäft ein Kunde von einer Person bedient wird. In diesem Fall erfolgt die Erzeugung der ldentifikationssignale durch die Bedienungsperson selbst oder der Bedienungsperson fest zugeordneten Signalgeber.

Bei der erfindungsgemäßen Ladenwaage ist vorgesehen, daß dem Empfänger des Gerätes ein oder mehrere die Identifikationssignale erzeugende Sender zugeordnet sind, wobei der Sender in Form eines Transponders gebildet ist, der die Identifikationssignale ansprechend auf von einer Sendeeinrichtung des Gerätes empfangene Signale erzeugt. Dabei können der Transponder und die Sendeeinrichtung des Gerätes so genau aufeinander abgestimmt werden, dass mit einfachen, kostengünstigen Geräte und wenig Sendeleistung eine Erkennung zahlreicher Vorgänge mit hoher Zuverlässigkeit möglich ist. Der dem Empfänger zugeordnete Sender bzw. Transponder kann beispielsweise in Form eines Fingerrings oder Armreifs verwirklicht sein.

Ein Verbund von erfindungsgemäßen Ladenwaagen weist zweckmäßigerweise Mittel zum Austauschen von Daten zwischen diesen Geräten und eine vorzugsweise durch eines der Geräte gebildete zentrale Einrichtung auf, mit der die an den Geräten erzeugten und einzelnen Vorgängen zugeordneten Werte abgerufen, ausgegeben und/oder zur weiteren Verarbeitung einem gesonderten System zugeführt werden. Dabei können mindestens zwei Geräte des Verbundes jeweils eine Sendeeinrichtung aufweisen, wobei diesen Sendeeinrichtungen mindestens ein Transponder zugeordnet ist, der ansprechend auf die von den Sendeeinrichtungen gesendete Signale die Identifikationssignale erzeugt.

Bei Einsatz eines erfindungsgemäßen Verbundes ist die Abwicklung einzelner Vorgänge nicht an eine einzige Lagenwaage gebunden, weil dank der Erzeugung der Kennzeichnungssignale bzw. der Validierung der entsprechenden Vorgänge bei jedem einzelnen Teilvorgang die Zuordnung zum richtigen Vorgang möglich ist, auch wenn ein anderes Gerät benutzt wird. Des weiteren ist es möglich, eine Mehrzahl von Vorgängen an einer dafür vorgesehenen Stelle im Verbund - die auch ein beliebiges der miteinander verbundenen Geräte sein kann - nachträglich zusammenzuführen. Das kann beispielsweise dazu dienen, die von ein und demselben Kunden an verschiedenen Orten abgewickelten Teilvorgänge eines Einkaufsvorganges, z. B. die dem Kunden an der Fleischtheke, der Gemüsetheke oder dem Delikatessenstand verkauften Waren, gemeinsam auszuwerten oder am Ende eines Tages die von einer bestimmten Person abgewickelten Vorgänge statistisch zu erfassen.

In einem erfindungsgemäßen Verbund ist es besonders vorteilhaft, Transponder zu benutzen, welche die die einzelnen Vorgänge identifizierenden Identifikationssignale erzeugen, weil in einem entsprechenden Verbund üblicherweise mehr Vorgänge bzw. mehr Benutzer des Systems auseinandergehalten werden müssen. Überdies kann es im Verbund notwendig sein, zu bestimmten Geräten Zulassungsbeschränkungen für gewisse Vorgänge einzuführen, was mit der Verwendung von Transpondem mit größerer Zuverlässigkeit geschehen kann. Nachstehend wird die Erfindung anhand eines Beispiels eines erfindungsgemäßen Verbundes von Ladenwaagen erläutert, wobei diese Erläuterung nicht als Beschränkung der Tragweite der Erfindung auf dieses Bespiel zu verstehen ist.

In einem Ladengeschäft, in dem die Kunden in Selbstbedienung Lebensmittel einkaufen können, sind für den Offenverkauf von Käse, Frischfleisch, Delikatessen usw. bediente Verkaufsinseln vorhanden, die mit einer oder mehreren preisrechnenden Ladenwaagen ausgerüstet sind. Obst und Gemüse suchen die Kunden selber aus und wägen das Gut auf den bereitstehenden Ladenwaagen. Die Waagen der Verkaufsinseln sind mit Sende-/Empfangseinrichtung samt einer Auswerteschaltung ausgerüstet. Die Sende-/Empfangseinrichtung und die zugehörige Auswerteschaltung kann alleinstehend in der Nähe des die Wägezelle enthaltenden Teils der Waage aufgebaut sein oder in ein entsprechendes Gehäuse integriert werden. Die die Waage bedienende Person trägt einen Transponder, der auf die Sende-/Empfangseinrichtung abgestimmt ist. Die Auswerteschaltung vermag die durch den Transponder veränderten Signale der Sende-/Empfangseinrichtung auseinanderzuhalten und mit großer Zuverlässigkeit zu erkennen, welcher Transponder sich gerade in der Nähe befindet. Der Transponder ist mit Vorteil z. B. in einen Fingerring oder ein Armband eingebaut, so dass mit ihm bei jeder Annäherung der Hand an die Waage der Empfang der durch den Transponder erzeugten Identifikationssignalen stattfinden kann. Eine gleichartige Waage kann auch an der Kassierstation am Ausgang des Selbstbedienungsladens bereitgestellt werden.

Ein Kunde, der Käse kaufen will, wendet sich an den Verkäufer. Dieser löst an der Waage einen neuen Vorgang aus. Das kann beispielsweise durch Betätigung einer Bedienungstaste erfolgen. Dank der automatischen Erkennung des Verkäufers bzw. des diesem Verkäufer zugeordneten Verkaufsvorganges mit dem erfindungsgemäßen Gerät braucht der Verkäufer keine weitere Anmeldung bzw. Zuordnung einzugeben, weil entsprechende Identifikationssignale automatisch von dem Gerät empfangen und ausgewertet werden.

Zur Sicherheit kann jedoch die Waage anzeigen, wen sie gerade erkannt hat. Sollte die auf Grundlage der von dem Verkäufer ausgehenden Identifikationssignale erfolgte Erkennung des Käufers wider Erwarten nicht korrekt sein, kann ein Korrekturvorgang in Gang gesetzt werden. Der Verkäufer wird nun wiederholt zubereiteten Käse als Wäggut auf die Waage legen und einen das Gewicht des Käses darstellenden Messwert ermitteln, sowie weitere Werte erzeugen, insbesondere den auf Grundlage des Gewichtes berechneten Preis. Dabei werden diese einzelnen Teilvorgänge durch Betätigung einer Buchungstaste abgeschlossen. Jeder der abgeschlossenen Teilvorgänge wird mit Hilfe der von dem Verkäufer ausgehenden Identifications signal automatisch dem selben Vorgang zugeordnet. Nach einer Wägung ist der Verkäufer damit beschäftigt, das nächste Wäggut vorzubereiten. In dieser Zeit kann ein weiterer Verkäufer die Waage in der selben Weise benutzen. Während der erste Verkäufer noch die nächste Portion Käse zubereitet, eröffnet der zweite einen neuen Vorgang und nimmt die erste Wägung dafür vor. Mit Hilfe der erfindungsgemäßen Ladenwaage wird auf Grundlage der von dem anderen Verkäufer ausgehenden ldentifikationssignale automatisch erkannt, dass es sich um einen anderen Vorgang handelt. Im folgenden ordnet die Waage die jeweiligen Wägungen den einzelnen Vorgängen zu.

Die Käse-Verkaufsinsel kann zwei oder mehr Waagen aufweisen, die miteinander verbunden sind. Dieser Verbund kann Daten der Waagen speichern und untereinander austauschen. Das erlaubt dem ersten Verkäufer mit dem nächsten Stück Käse zu einer anderen Waage auszuweichen, wenn die erste Waage, mit der er den Vorgang eröffnet hat, gerade besetzt ist. Auch dieser Ablauf kann mit einem erfindungsgemäßen Verbund auf erfindungsgemäßen Ladenwaagen abgewickelt werden. Die weitere Waage empfängt die von dem jeweiligen Verkäufer ausgehenden, beispielsweise mit Hilfe eines von dem Verkäufer getragenen Transponders erzeugten Identifikationssignale und kann dank dem Datenaustausch im Verbund die im Verlauf des an dieser weiteren Waage ausgeführten Teilvorganges erzeugten Werte dem an der anderen Waage begonnenen Vorgang zuordnen. Durch Betätigung einer entsprechenden Taste einer Eingabetastatur, z. B. durch Betätigen der Taste "Total" kann ein Steuersignal erzeugt werden, welches den Abschluss eines Vorganges anzeigt.

## Patentansprüche

1. Ladenwaage für Wägungen von Wägegütern, die von Verkäufern im Verlauf eines ihnen zugeordneten und sich auf die Bedienung jeweils eines Kunden beziehenden Verkaufsvorgangs auf die Ladenwaage auflegbar sind, mit einer Einrichtung zum Zuordnen der Wägungen zu dem jeweiligen Verkaufsvorgang und einer Kennzeichnungseinrichtung zum Erzeugen von den jeweiligen Verkaufsvorgang kennzeichnenden Kennzeichnungssignalen, wobei die Zuordnungseinrichtung zum Zuordnen der einzelnen Wägungen zu dem jeweiligen Verkaufsvorgang auf Grundlage der Kennzeichnungssignale betreibbar ist, sowie einer Steuersignalerzeugungseinrichtung zum Erzeugen von den Abschluß des jeweiligen Verkaufsvorgangs darstellenden Steuersignalen, **dadurch gekennzeichnet, daß** die Kennzeichnungseinrichtung eine Sende-/Empfangseinrichtung für darauf abgestimmte, von den Verkäufern getragene Transponder aufweist, von denen automatisch Identifikationssignale in die Kennzeichnungseinrichtung eingebbar sind, wobei die Zuordnung der Wägungen während des jeweiligen Verkaufsvorgangs aufgrund einer Auswertung der von den Verkäufern ausgehenden ldentifikationssignale erfolgt.

2. Ladenwaage nach Anspruch 1, **gekennzeichnet durch** eine Steuereinrichtung, mit der die Ladenwaage zur zeitlich überlappenden Abwicklung von mindestens zwei Verkaufvorgängen ansteuerbar ist, in deren Verlauf jeweils mindestens eine Wägung erfolgt.

3. Ladenwaage nach Anspruch 1, **dadurch gekennzeichnet, daß** der Steuereinrichtung eine Speichereinrichtung zugeordnet ist, in der die Ergebnisse der Wägungen derart abgelegt werden, daß sie den von den Kennzuchnungs signalen **gekennzeichnet**en Verkaufsvorgängen zugeordnet sind.

4. Ladenwaage nach einem der vorhergehenden Ansprüche, **dadurch gekennzeichnet, daß** die Kennzeichnungseinrichtung eine Sendeeinrichtung zum Senden von die Erzeugung der ldentifikationssignale veranlassenden Signalen aufweist.

5. Ladenwaage nach einem der vorhergehenden Ansprüche, **dadurch gekennzeichnet, daß** die Steuereinrichtung ansprechend auf die Kennzeichnung signale zum Abrufen und/oder Ausgeben von den einzelnen Verkaufsvorgängen zugeordneten Daten und/oder zur Anpassung von Einstellungen der Ladenwaage an die einzelnen Verkaufsvorgänge betreibbar ist.

6. Ladenwaage nach einem der vorhergehenden Ansprüche, **dadurch gekennzeichnet, daß** der Transponder in ein vom Verkäufer getragenes Armband bzw. einen Armreif oder einen Fingerring eingebaut ist.

7. Verbund von Ladenwaagen nach einem der vorhergehenden Ansprüche, mit Mitteln zum Austauschen von Daten zwischen den Ladenwaagen und einer vorzugsweise durch eine der Ladenwaagen gebildeten zentralen Einrichtung, mit der die an den Ladenwaagen erzeugten und einzelnen Verkaufsvorgängen zugeordneten Werte abgerufen, ausgegeben und/oder zur weiteren Verarbeitung einem gesonderten System zugeführt werden. ,

## Claims

1. Shop scale for weighing weighable goods which are, in the course of an associated selling process, placed by sales staff on the shop scale whilst serving a customer, comprising a device for associating weighing processes to a respective sales process, and a marking device for producing characteristic signals which characterise a respective sales process, and the associating device is operated for associating individual weighing processes to a respective sales process as based on the characterising signals, and a control signal generating device for generating control signals which represent conclusion of a respective sales process **characterised in that** the characterising device comprises a transmitting/receiving device for respectively tuned transponders carried by the sales persons, wherefrom identification signals are automatically entered into the characterising device, and the association of weighing processes during a respective sales process takes place based on identification signals which originate from the sales person.

2. Shop scale according to Claim 1, **characterised by** a control device by means of which the shop scale is controlled with regard to temporally overlapping processing of at least two sales processes in the course of which at least one respective weighing process takes place.

3. Shop scale according to Claim 1, **characterised in that** the control device is associated with a memory where the results of weighing processes are stored in such a manner that they are associated with sales processes as **characterised by** the characterising signals.

4. Shop scale according to one of the above claims, **characterised in that** the characterising device comprises a transmitter for transmitting signals which initiate generation of identification signals.

5. Shop scale according to one of the above claims, **characterised in that** the control device us operated so as to respond to characterising signals for calling up and/or issuing data associated with individual sales processes and/or for settings of the shop scale which match individual sales processes.

6. Shop scale according to one of the above claims, **characterised in that** the transponder is built into an armband or wrist strap or a finger ring carried by a sales person.

7. Linking of shop scales according to one of the above claims, with means for a data exchange between shop scales and a central device which is preferably formed by one of the shop scales and by means of which values produced at the shop scales and associated with individual sales processes can be called up, dispensed and/or sent to a separate system for further processing.

## Revendications

1. Balance de magasin pour des pesées de marchandises à peser, qui peuvent être posées par des vendeurs sur la balance de magasin au cours d'un processus de vente attribué à ces marchandises et se rapportant au service d'un client respectif, avec un dispositif pour l'attribution des pesées au processus de vente concerné et à un dispositif de marquage pour générer les signaux de marquage caractérisant le processus de vente concerné, le dispositif d'attribution pour l'attribution des pesées individuelles au processus de vente respectif pouvant être exploité sur la base des signaux de marquage, et un dispositif de génération de signal de commande pour générer des signaux de commande représentant l'achèvement de l'opération de vente concernée, **caractérisée en ce que** le dispositif de marquage présente un dispositif d'émission/réception pour des transpondeurs adaptés à ce dispositif et portés par les vendeurs, par lesquels des signaux d'identification peuvent être entrés automatiquement dans le dispositif de marquage, l'attribution des pesées pendant le processus de vente concerné s'effectuant sur la base d'une analyse des signaux d'identification émanant des vendeurs.

2. Balance de magasin selon la revendication 1, **caractérisée par** un dispositif de commande, avec lequel la balance de magasin est activée pour l'exécution simultanée d'au moins deux processus de vente, dans le déroulement desquels intervient à chaque fois au moins une pesée.

3. Balance de magasin selon la revendication 1, **caractérisée en ce que** au dispositif de commande est attribué un dispositif de stockage dans lequel les résultats des pesées sont déposés de telle sorte qu'ils sont attribués aux processus de vente **caractérisés par** les signaux de marquage.

4. Balance de magasin selon l'une quelconque des revendications précédentes, **caractérisée en ce que** le dispositif de marquage présente un dispositif d'émission pour l'émission de signaux ordonnant la production des signaux d'identification.

5. Balance de magasin selon l'une quelconque des revendications précédentes, **caractérisée en ce que** le dispositif de commande peut être exploité en réponse aux signaux de marquage pour l'appel et/ou pour l'émission de données attribuées aux processus de vente individuels et/ou pour l'adaptation de réglages de la balance de magasin aux processus de vente individuels.

6. Balance de magasin selon l'une quelconque des revendications précédentes, **caractérisé en ce que** le transpondeur est intégré dans un bracelet porté par le vendeur ou une bague de doigt.

7. Ensemble de balances de magasin selon l'une quelconque des revendications précédentes, avec des moyens pour l'échange de données entre les balances de magasin et un dispositif central formé de préférence par l'une des balances de magasin, avec lequel les valeurs générées sur les balances de magasin et attribuées aux processus de vente individuels sont appelées, sorties et/ou acheminées pour le traitement ultérieur à un système séparé.
